# FASCICULE DE BREVET EUROPEEN

(11) **EP 2 417 411 B1**
(45) Date de publication et mention de la délivrance du brevet: **29.08.2018**
(21) Numéro de dépôt: 10715994.9
(22) Date de dépôt: 29.03.2010
(51) Int. Cl.: F25J 3/06, B01D 53/00, F17C 7/04

(54) **PROCEDE ET SYSTEME FRIGORIFIQUE POUR LA RECUPERATION DE LA FROIDEUR DU METHANE PAR DES FLUIDES FRIGORIGENES**
KÜHLVERFAHREN UND SYSTEM ZUR KÄLTERÜCKGEWINNUNG AUS METHAN DURCH KÄLTEMITTEL
REFRIGERATION PROCESS AND SYSTEM FOR RECOVERING COLD FROM METHANE BY REFRIGERANTS

(30) Priorité: 07.04.2009 FR 0952268
(43) Date de publication de la demande: 15.02.2012
(73) Titulaire: Association Pour La Recherche Et Le Développement De Méthodes Et Processus Industriels "Armines", 75006 Paris (FR)
(72) Inventeur: CLODIC, Denis, F-75006 Paris (FR); YOUNES, Mourad, F-78700Conflans-Sainte-Honorine (FR); RIACHI, Youssef, F-75013 Paris (FR)
(74) Mandataire: Delumeau, François Guy
(86) Numéro de dépôt international: PCT/FR2010/050575
(87) Numéro de publication internationale: WO 2010/116067

(56) Documents cités:
- DE-A1-102007 032 536
- US-A- 3 702 063
- US-A- 5 467 722
- US-A- 6 082 133
- US-A1- 2004 148 961
- US-A1- 2008 302 133
- DATABASE WPI Section Ch, Week 197712 Thomson Scientific, London, GB; Class J07, AN 1977-20665Y XP002568397, "Liquefaction of air - after removal of water vapour and carbon dioxide", -& JP 52 016480 A (NIPPON OXYGEN CO LTD) 7 février 1977 (1977-02-07)
- MAK J Y: "MIXED FLUID POWER RANKINE CYCLE USING LNG AS HEAT SINK", AICHE SPRING MEETING. NATURAL GAS UTILIZATION CONFERENCE, X, US, 1 janvier 2005 (2005-01-01), XP009079006,

## Description

### Arrière-plan de l'invention

L'invention se situe dans le domaine de la récupération de frigories à très basse température, la source de frigories étant du méthane liquide sous pression, par exemple obtenu lors du dépotage des méthaniers de gaz naturel liquéfié.

On rappelle qu'usuellement, le transport de méthane en méthanier se fait à pression atmosphérique, les pertes thermiques étant compensées par l'ébullition à pression atmosphérique du méthane.

Lorsque le méthanier arrive au port de déchargement, le méthane est extrait par des pompes qui compriment le méthane liquide sous une pression typique de 6 MPa.

Cette compression en phase liquide qui consomme environ 30 fois moins d'énergie qu'une compression en phase gaz est nécessaire pour la distribution dans le réseau primaire de gaz naturel ; elle permet de compenser les pertes de charge associées au débit du gaz sur plusieurs centaines de kilomètres.

Dans la pratique, le méthane liquéfié est transféré sous pression vers le réseau de distribution après un réchauffage effectué dans des échangeurs noyés dans la mer jusqu'à une température de l'ordre de 15°C.

La puissance frigorifique récupérable se chiffre en dizaine de mégawatts.

Jusqu'à présent, l'usage de ces frigories est très réduit. L'invention propose d'utiliser la froideur du méthane récupérée pour capter par givrage du CO₂ compris dans des fumées, ou plus généralement dans un gaz.

L'homme du métier comprendra que cette utilisation impose une contrainte particulière, les débits de méthane et du gaz porteur de CO₂ étant indépendants.

L'invention vise donc un système de récupération de la froideur de méthane obtenu à partir d'une compression en phase liquide qui est utilisé pour capter du CO₂ par givrage, les débits de méthane et du gaz porteur de CO₂ étant considérés comme totalement non corrélés.

Les documents US 2007/0186563 et WO 02/060561 décrivent respectivement un procédé de récupération de la froideur du méthane et un procédé frigorifique de captage du CO₂ sur les fumées d'unités de production d'énergie. Le document US-A- 6 082 133 décrit un procédé et un système frigorifique de captage du CO₂ sur les gaz de fermentation, dit "Biogaz", en liquéfiant en même temps le méthane contenu dans le Biogaz et en récupérant de la froideur du méthane ainsi liquéfié.

### Objet et résumé de l'invention

Selon un premier aspect, l'invention concerne un système frigorifique selon la revendication 1. Dans un mode particulier de réalisation de l'invention, la température normale d'ébullition précitée est typiquement comprise entre -80 et -160°C.

L'invention permet ainsi de récupérer la froideur du méthane liquéfié dans des échangeurs d'une cascade intégrée d'un système frigorifique à mélange de fluides frigorigènes.

Elle se caractérise par le fait que le méthane liquéfié cède sa froideur en s'évaporant ou en transférant sa chaleur sensible liquide ou gazeuse dans des échangeurs où circulent au moins trois débits différents : le débit de méthane, un débit de mélange de fluides frigorigènes condensant et un débit de mélange de fluides frigorigènes s'évaporant.

Elle se caractérise aussi en ce que le système de récupération de la froideur du méthane liquéfié selon l'invention comporte des échangeurs traitants deux débits producteurs de froid autrement dit absorbeurs de chaleur et un débit donneur de chaleur.

Le méthane peut être soit sous pression supercritique soit sous pression infracritique. Il circule dans les échangeurs à contre-courant du mélange diphasique de fluides frigorigènes qui se condense ou se sous-refroidit.

Le méthane se réchauffe dans le domaine supercritique ou s'évapore dans le domaine diphasique lorsque le méthane est sous pression infracritique.

Parallèlement à ce refroidissement et dans le même échangeur, le débit de mélange de fluides frigorigènes qui se condense est aussi partiellement refroidi par une portion du débit du mélange de fluides frigorigènes.

Dans un mode préféré de réalisation, le système frigorifique selon l'invention comporte au moins un séparateur pour obtenir une phase liquide sous pression du mélange de fluides frigorigènes, un détendeur apte à faire chuter la pression de cette phase liquide, et des moyens pour rediriger au moins une partie de la phase liquide détendue dans le débit basse pression de mélange de fluides frigorigènes producteur de froid.

Cette caractéristique permet d'adapter le débit basse pression dans un échangeur de la cascade, et donc d'ajuster le niveau de condensation et la température du débit haute pression dans cet échangeur. Le système frigorifique selon l'invention comporte :
- des moyens pour détendre le débit haute pression refroidi en sortie de la cascade et en diriger au moins une partie vers au moins un échangeur frigorifique traversé par un gaz porteur de CO₂, cet échangeur frigorifique fonctionnant en cycle de givrage. De plus, le système frigorifique selon l'invention comporte :
   - des moyens pour obtenir une phase liquide à partir du débit haute pression à refroidir;
   - des moyens pour détendre cette phase liquide et en diriger au moins une partie dans l'échangeur frigorifique, celui-ci fonctionnant en cycle de dégivrage.

Au moins une partie du mélange de fluides frigorigènes obtenu en sortie des échangeurs frigorifiques fonctionnant en cycle de dégivrage peut avantageusement être utilisé pour compléter le débit basse pression de mélange de fluides frigorigènes en entrée d'un ou plusieurs échangeurs de la cascade.

Dans un mode particulier de réalisation, les échangeurs sont contrôlés pour fonctionner alternativement en cycle de givrage et en cycle de dégivrage.

L'invention permet ainsi de capter du CO₂ par antisublimation sur les échangeurs frigorifiques qui fonctionnent alternativement en mode de givrage et mode dégivrage. Elle constitue ainsi un perfectionnement du système en cascade intégrée décrit dans le document WO 02/060561.

Dans un mode particulier de réalisation, le débit basse pression de mélange de fluides frigorigènes est essentiellement obtenu à partir du débit de mélange de fluides frigorigènes en sortie des échangeurs frigorifiques lorsqu'ils fonctionnent en cycle de givrage.

Dans un mode particulier de réalisation, le système frigorifique selon l'invention comporte des moyens pour soutirer une partie de la phase liquide du débit basse pression de mélange de fluides frigorigènes en sortie des échangeurs frigorifiques.

Cette caractéristique constitue un élément complémentaire de régulation nécessaire lorsque le débit de méthane (qui doit être réchauffé de -158°C à +15°C) est en excès par rapport aux besoins frigorifiques du système.

Dans un mode particulier de réalisation, le système frigorifique selon l'invention comporte des moyens pour comprimer la phase liquide sous haute pression, un ou plusieurs évaporateurs apte à vaporiser cette phase liquide sous haute pression et une turbine pour détendre cette vapeur haute pression pour produire de l'énergie mécanique.

Dans un mode particulier de réalisation, le système frigorifique selon l'invention comporte :
- un compresseur à fréquence variable apte à comprimer le débit basse pression en sortie de la cascade ; et
- un condenseur partiel apte à condenser le mélange de fluides frigorigènes compressé par ce compresseur afin de régénérer le débit haute pression pour réintroduction dans la cascade.

Dans un mode particulier de réalisation, ce condenseur partiel est un évaporateur/condenseur utilisé pour vaporiser la phase liquide haute pression avant détente dans la turbine.

De façon très avantageuse, la récupération de froideur est modulable en fonction du fonctionnement du système de captage de CO₂ et de la disponibilité du débit froid de méthane.

Le système frigorifique selon l'invention est en particulier apte à fonctionner :
- à pleine charge du système de captage de CO₂ pour traiter un débit nominal de fumées ou de gaz, avec récupération nominale de la froideur du méthane ;
- à pleine charge du système de captage de CO₂ avec récupération réduite de la froideur du méthane ; ou
- à charge réduite du système de captage de CO₂ avec récupération nominale de la froideur du méthane.

En effet, et de façon très avantageuse, le système frigorifique selon l'invention est toujours capable de réchauffer le méthane, quelque soit le débit de méthane et quelque soit le débit des fumées ou des gaz traités par le système frigorifique de captage du CO₂.

Plus précisément, si le débit de méthane est réduit à zéro, les échangeurs fonctionnent uniquement entre la fraction du débit du mélange que s'évapore et la fraction du mélange qui se condense.

Par contre dès que le débit de méthane est supérieur à zéro, le débit d'évaporation du mélange de fluides frigorigènes est adapté mais circule toujours, et si la froideur du méthane est en excès par rapport aux besoins du système frigorifique, le méthane est cependant réchauffé et la froideur en excès est transformée en énergie mécanique produite par le mélange de fluides frigorigènes.

On rappelle que pour transporter le méthane après son extraction du sous-sol, on utilise soit le transport par pipeline soit le transport par méthanier.

La première solution demande une grande dépense d'énergie pour comprimer le méthane en phase gaz sur des centaines de kilomètres par des stations de compression.

Dans le deuxième cas, il faut dépenser de l'énergie en refroidissant le méthane jusqu'à -161°C par un système frigorifique qui consomme énormément d'énergie. Cette froideur est toujours disponible lors du dépotage du méthane. En récupérant la froideur du méthane dans les échangeurs de la cascade intégrée, l'invention permet une grande économie d'énergie, celle-ci n'ayant plus à être produite par le compresseur.

L'invention vise aussi un procédé de récupération de la froideur d'un débit de méthane liquéfié selon la revendication 8. Les avantages et caractéristiques particuliers de ce procédé de récupération de la froideur d'un débit de méthane liquéfié sont identiques à ceux du système frigorifique selon l'invention et ne seront pas rappelés ici.

### Brève description des dessins

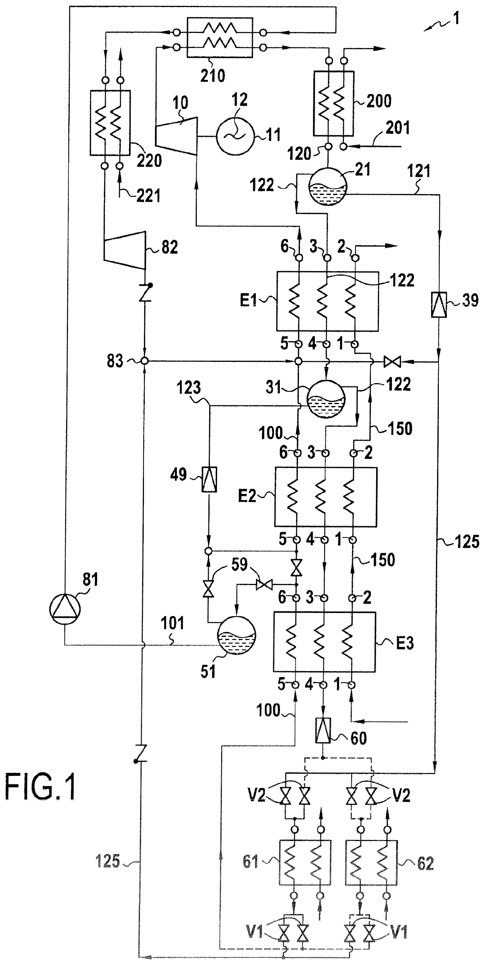

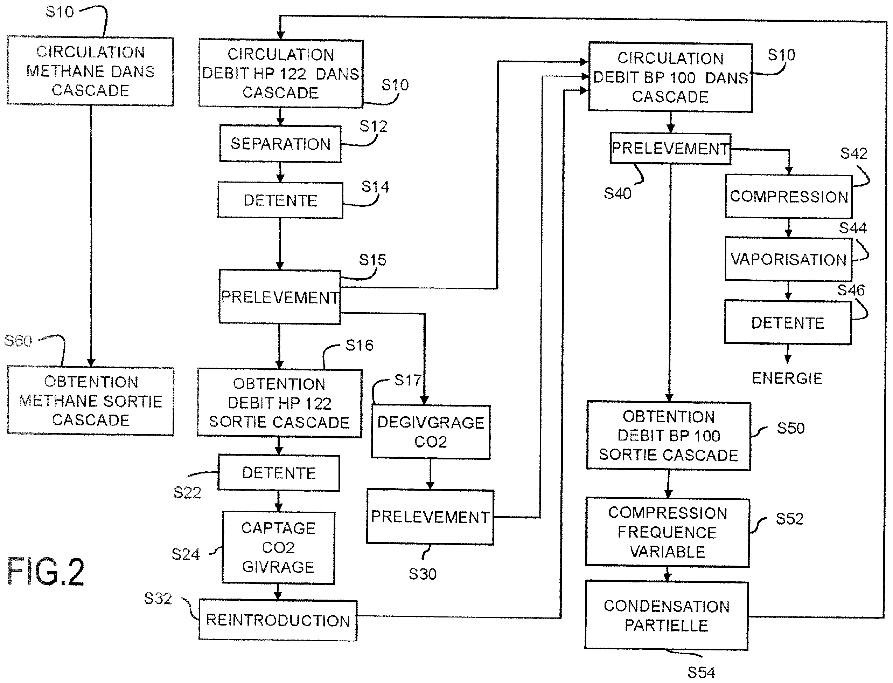

D'autres caractéristiques et avantages de la présente invention ressortiront de la description faite ci-dessous, en référence aux figures 1 et 2 dans lesquelles :
- la figure 1 représente un système frigorifique conforme à un mode particulier de réalisation de l'invention ; et
- la figure 2 représente, sous forme d'organigramme, les principales étapes d'un procédé de récupération de la froideur d'un débit de méthane liquéfié conforme à un mode particulier de réalisation de l'invention.

### Description détaillée de l'invention

La figure 1 représente un système frigorifique conforme à un mode particulier de réalisation de l'invention. La figure 2 illustre un procédé de récupération de la froideur d'un débit de méthane liquéfié conforme à un mode particulier de réalisation de l'invention.

Dans le mode de réalisation décrit ici, le système frigorifique 1 comporte trois échangeurs E1, E2, E3 en cascade.

Conformément à l'invention, chacun de ces échangeurs comporte trois débits, à savoir :
- un débit 150 de méthane donneur de froid qui entre dans l'échangeur E1, E2, E3 par une entrée 1 et en ressort par une sortie 2;
- un débit 122 haute pression de mélange de fluides frigorigènes qui entre dans l'échangeur E1, E2, E3 par une entrée 3 se condense partiellement ou complètement, et en ressort par une sortie 4 ; et
- un débit 100 basse pression de mélange des mêmes fluides frigorigènes, qui entre dans l'échangeur E1, E2, E3 par une entrée 5, s'évapore, et en ressort par une sortie 6.

Dans le mode de réalisation décrit ici, le débit 122 haute pression de mélange de fluides frigorigènes circule, dans chacun des échangeurs E1, E2, E3, à contre courant du débit 150 de méthane et du débit 100 basse pression de mélange de fluides frigorigènes. La circulation des trois débits dans la cascade est référencée S10 sur la figure 2.

Le méthane peut être soit sous une pression supérieure à sa pression critique (4,56 MPa) soit à une pression sous critique.

Lorsque le méthane est à une pression supercritique, il est soit dans un état soit de liquide sous-refroidi, soit dans un état de gaz dense.

En effet, le méthane aspiré par le système de pompage à -161°C sous une pression de 0,1 MPa, est comprimé en sortie du méthanier à des pressions typiques de 6 à 8 MPa, supérieures à la pression critique. Le réchauffement associé à cette compression en phase liquide est extrêmement limité, typiquement 3K.

Après compression, on dispose donc d'un méthane à environ -158°C et 6 ou 8 MPa.

Dans le mode de réalisation décrit ici, le débit 150 de méthane supercritique traverse les échangeurs E3, E2, E1 en cascade, dans cet ordre.

Le débit 150 de méthane supercritique et le débit 100 basse pression de mélange de fluides frigorigènes se réchauffent, le débit haute pression 122 de fluides frigorigènes se refroidissant en absorbant la froideur des deux autres débits 150, 100.

Les échanges entre le méthane 150 et le débit 122 haute pression de mélange de fluides frigorigènes peuvent être :
- soit méthane supercritique / mélange diphasique de fluides frigorigènes se condensant ;
- soit méthane supercritique / mélange de fluides frigorigènes liquide se sous-refroidissant.

Dans le mode de réalisation décrit ici, le débit 150 de méthane se réchauffe d'environ -158°C (température à l'entrée de l'échangeur E3) à environ +15°C (température en sortie de l'échangeur E1).

En passant de -158°C à environ 15°C, le méthane cède environ 800 kJ/kg.

La froideur du méthane peut aussi être récupérée (étape S60) à une pression sous critique, par exemple à 3,2 MPa lorsque le méthane est injecté comme combustible dans une turbine. Dans ce mode de réalisation, le méthane cède environ :
- 250 kJ/kg entre -153°C et - 94°C (réchauffement du méthane liquide sous-refroidi jusqu'au point de liquide saturant) ;
- 250 kJ/kg en s'évaporant à -94°C ; et
- 190 kJ/kg entre de -94°C à + 15°C.

En tout état de cause, il est important ne pas oublier que, dans la plupart des applications, le débit 150 de méthane n'est pas maîtrisé.

Le débit 122 haute pression de mélange de fluides frigorigènes comporte des fluides frigorigènes à faible température normale d'ébullition comme le méthane et l'éthane ou l'éthylène.

Dans l'exemple de réalisation décrit ici, ce mélange 122 comporte 15% méthane, 30% éthane, 15% propane, 40% butane.

Dans l'exemple de réalisation décrit ici, le système frigorifique 1 selon l'invention comporte un condenseur partiel 200 en amont de l'échangeur E1, apte à produire un mélange de fluides frigorigènes 120, en état diphasique, à une température par exemple de 20 °C et sous la haute pression du système frigorifique 1 de l'ordre de 2 à 2,5 MPa.

Dans l'exemple de réalisation décrit ici, le condenseur 200 utilise un débit d'eau 201 pour refroidir et condenser partiellement le mélange de fluide frigorigènes 120.

Dans l'exemple de réalisation décrit ici, le système frigorifique 1 selon l'invention comporte un séparateur 21 en sortie du condenseur partiel 200, apte à séparer (étape S12) la phase vapeur 122 et la phase liquide 121 du mélange diphasique 120.

Seul le débit vapeur 122 entre dans l'échangeur E1 par son entrée 3.

Conformément à l'invention, le débit vapeur 122 croise, dans l'échangeur E1, le débit de méthane 150 et le débit 100 basse pression de mélange de fluides frigorigènes.

Le débit vapeur haute pression 122 se condense partiellement dans l'échangeur E1 et en sort, par la sortie 4, en état diphasique.

Dans l'exemple de réalisation décrit ici, le débit vapeur 122 entre dans l'échangeur E1, à une température d'environ 20°C et en ressort à une température typique de -45°C.

Dans l'exemple de réalisation décrit ici, le système frigorifique 1 comporte un autre séparateur 31, apte à séparer (étape S12) la phase vapeur 122 et la phase liquide 123 du mélange diphasique en sortie 4 de l'échangeur E1.

Le débit vapeur 122, en sortie du séparateur 31, entre dans l'échangeur E2 par son entrée 3.

Le débit vapeur haute pression 122 se condense dans l'échangeur E2 en rencontrant le débit de méthane 150 et le débit 100 basse pression de mélange de fluides frigorigènes.

Dans l'exemple de réalisation décrit ici, cette condensation est partielle.

Dans l'exemple de réalisation décrit ici, le débit vapeur 122 entre dans l'échangeur E2, à une température d'environ -45°C et en ressort, en état diphasique, à une température typique de -80°C, après avoir repris la froideur du débit de méthane 150 et du débit basse pression de mélange de fluides frigorigènes 100 qui lui, s'évapore.

Dans l'exemple de réalisation décrit ici, la sortie 4 de l'échangeur E2 est raccordée directement à l'entrée 3 de l'échangeur E3. Il n'est en effet pas nécessaire d'utiliser de séparateur entre les échangeurs E2 et E3, le froid disponible sur les débits 100 et 150 étant suffisant pour achever la condensation du débit 122.

Dans l'exemple de réalisation décrit ici, le débit diphasique 122 entre dans l'échangeur E3, à une température d'environ -80°C et en ressort (étape S16), en état liquide après condensation complète, à une température typique de -100°C, après s'être refroidi au contact du débit de méthane 150 et du débit 100 basse pression de mélange de fluides frigorigènes.

Il a été dit, que dans l'exemple de réalisation décrit ici, le débit basse pression 100 traverse la cascade d'échangeurs, à contre-courant du débit 122 haute pression de mélange de fluides frigorigènes.

Ce débit traverse donc successivement les échangeurs E3, E2, E1, dans cet ordre.

Dans le mode de réalisation décrit ici, le débit 100 basse pression provient alternativement d'un échangeur 61, 62 en cycle de givrage (étape S24) dont le fonctionnement sera décrit ultérieurement.

Dans l'exemple de réalisation décrit ici, un ensemble de quatre vannes V1 permet de relier la sortie de l'un ou l'autre des échangeurs 61, 62 à l'entrée 5 de l'échangeur E3, afin d'introduire (étape S32) le débit basse pression 100 dans la cascade.

Dans l'exemple de réalisation décrit ici, le débit 100 de mélange basse pression de fluides frigorigènes entre dans l'échangeur E3 en phase vapeur avec une faible quantité de liquide.

Conformément à l'invention, le débit 100 de mélange basse pression se réchauffe, dans l'échangeur E3, au contact du débit 122 haute pression de mélange de fluides frigorigènes.

Dans le mode de réalisation décrit ici, le système frigorifique 1 selon l'invention comporte des moyens pour réguler le débit basse pression 100 aux entrées 5 des échangeurs E2 et E3.

Plus précisément, dans l'exemple de réalisation décrit ici, le système frigorifique 1 selon l'invention comporte des moyens pour rediriger (étape S15) au moins une partie de la phase liquide 123 obtenue par le séparateur 31 dans le débit basse pression 100 qui entre en 5 dans l'échangeur E2.

Conformément à l'invention, la phase liquide 123 obtenue par le séparateur 31 est à haute pression (de 2 à 2,5 MPa), identique à la pression de refoulement du compresseur aux pertes de charge près.

Dans l'exemple de réalisation décrit ici, le système frigorifique 1 selon l'invention comporte en conséquence un détendeur régulateur 49 pour faire chuter (étape S14) la pression de cette phase liquide 123, avant introduction dans l'échangeur E2.

Le régulateur 49 permet ainsi d'adapter le débit basse pression 100 dans l'échangeur E2, ce qui permet d'ajuster le niveau de condensation partielle du débit haute pression 122 et de maintenir sa température à la valeur souhaitée de -80°C en sortie 4 de cet échangeur.

De la même façon, le système frigorifique 1 selon l'invention, comporte aussi un détendeur régulateur 39, apte à détendre (étape S14) une partie de la phase liquide haute pression 121 obtenue par le séparateur 21, et une canalisation pour diriger (étape S15) la phase liquide basse pression ainsi obtenue dans le débit basse pression 100 introduit dans l'échangeur E1.

Ce détendeur régulateur 39 permet ainsi d'adapter le débit basse pression 100 dans l'échangeur E1, pour ajuster le niveau de condensation du débit haute pression 122 et maintenir sa température à la valeur souhaitée de -45°C en sortie 4 de cet échangeur.

Dans le mode de réalisation décrit ici, le débit basse pression 100 obtenu (étape S50) en sortie de la cascade E3, E2, E1 est compressé (étape S52) par un compresseur 10 et partiellement condensé (étape S54) pour régénérer le mélange de fluides frigorigènes 120 haute pression en amont du condenseur partiel 200 déjà décrit.

Dans le mode de réalisation décrit ici, le système frigorifique 1 selon l'invention comporte un variateur de fréquence 12 qui adapte la vitesse de rotation d'un moteur électrique 11 qui entraîne le compresseur 10 du système frigorifique 1.

Ce variateur de fréquence 12 permet de réguler le débit de mélange de fluides frigorigènes 120 dans la cascade E1, E2, E3.

On rappelle que dans le mode de réalisation décrit ici, le débit 100 basse pression en entrée de la cascade E3, E2, E1 est obtenu par des échangeurs 61, 62 en cycle de givrage (étape S24) dont le fonctionnement va maintenant être décrit. Conformément à l'invention, on utilise indirectement la froideur du méthane pour capter du CO₂. Conformément à l'invention, le CO₂ est capté par antisublimation sur les échangeurs frigorifiques 61, 62 qui fonctionnent alternativement en mode givrage et en mode dégivrage, selon un principe étant dans le document WO 02/060561. Conformément à l'invention, pour givrer le CO₂, on fait circuler dans l'échangeur frigorifique 61 (ou 62) le débit 122 de mélange de fluides frigorigènes en sortie de la cascade à une température typique de -100°C, ce débit 122 étant préalablement baissé en pression par un détendeur 60 placé en sortie de la cascade (étape S22).

Et pour dégivrer le CO₂ déposé sur l'échangeur frigorifique 61 (ou 62), on fait circuler dans cet échangeur une fraction 125 de la phase liquide 121 prélevée (étape S15) en sortie du séparateur 21, après détente (étape S14) par le détendeur régulateur 39 déjà décrit.

Il a déjà été dit que la température de la phase liquide 121 en sortie du séparateur 21 est de l'ordre de 20°C.

Dans l'exemple de réalisation décrit ici, la température du débit de dégivrage 125, en sortie du détendeur 39 est de l'ordre de -40°C, compte tenu de la forte concentration en fluides frigorigènes à faible température normale d'ébullition (éthane, méthane) et le titre vapeur est relativement élevé supérieur à 30%.

Dans l'exemple de réalisation décrit ici, des vannes V2 permettent de faire circuler alternativement (en l'occurrence toutes les dix minutes) dans chacun des échangeurs 61, 62 :
- le débit haute pression 122 générateur de froid par évaporation (cycle de givrage du CO₂) ; et
- le débit prélevé haute pression 125 générateur de chaud (cycle de dégivrage du CO₂).

Il a déjà été dit que, dans le mode de réalisation décrit ici, le débit haute pression 122 obtenu en sortie des échangeurs 61, 62 en cycle de givrage constituait le débit 100 basse pression introduit dans l'entrée 5 de l'échangeur E1.

Dans le mode de réalisation décrit ici, le débit basse pression en phase liquide obtenu en sortie des échangeurs 61, 62 en cycle de dégivrage passe par un noeud 83 et est réintégré dans l'entrée 5 de l'échangeur E1. Sa température variable est typiquement comprise entre -80 °C et - 50°C.

Dans le mode de réalisation décrit ici, le système frigorifique 1 selon l'invention comporte un élément complémentaire de régulation nécessaire lorsque le débit de méthane (qui doit être réchauffé de -158°C à +15°C) est en excès par rapport aux besoins frigorifiques du système 1.

Dans le mode de réalisation décrit ici, le système frigorifique 1 comporte une sonde de température pour mesurer la température du débit basse pression 100 en sortie 6 de l'échangeur E1 afin de détecter un tel excès. En effet, si la puissance frigorifique du débit haute pression 122 qui entre dans un échangeur frigorifique 61, 62 en cycle de givrage est bien supérieure aux besoins de givrage, le débit basse pression diphasique 100 réintroduit dans l'échangeur E1, après traversée de cet échangeur 61, 62 présentera un titre de liquide élevé. Il s'évaporera dans l'échangeur E3 et sa température de sortie, mesurée par le thermomètre précité sera bien plus basse qu'usuellement.

Dans le mode de réalisation décrit ici, l'excès 101 de liquide est séparé (étape S40) par un séparateur 51 en sortie 6 de l'échangeur E3, comprimé par une pompe 81 (étape S42) et envoyé sous haute pression vers un système d'évaporation 210, 220 où il s'évapore (étape S44), détendu (étape S46) dans une turbine 82 qui produit de l'énergie mécanique ou électrique, puis réintégré via le noeud 83 en entrée 5 de l'échangeur E1 en complément du débit basse pression 100 issu de la sortie 6 de l'échangeur E2.

Dans le mode de réalisation décrit ici, l'évaporation du débit haute pression 101 s'effectue en deux temps.

Plus précisément, une première évaporation est avantageusement effectuée dans un évaporateur/condenseur partiel 210 placé en coupure de flux entre la sortie du compresseur 10 et l'entrée du condenseur partiel 200, de sorte que cette première évaporation du débit 101 haute pression permet une condensation partielle (étape S54) du mélange de fluides frigorigènes 120 compressé (étape S52) par le compresseur 10.

Dans le mode de réalisation décrit ici, le débit haute pression 101 finit de s'évaporer dans un évaporateur 220 où le fluide de réchauffement 221 est de l'air de l'eau ou un fluide procédé.

Dans le mode de réalisation décrit ici, le débit 101 est sous une haute pression au moins égale à la haute pression du système frigorifique 1.

Cette régulation permet de faire fonctionner le système frigorifique 1 selon l'invention dans des plages de fonctionnement où varient les débits externes au système à savoir le débit des fumées ou des gaz procédés à traiter et le débit de méthane qui doit être réchauffé.

## Revendications

1. Système frigorifique pour capter par givrage du CO₂ compris dans un gaz comportant une pluralité d'échangeurs (E1, E2, E3) en cascade, chacun desdits échangeurs comportant :
- un débit (150) de méthane liquéfié producteur de froid ;
- un débit (122) haute pression d'un mélange diphasique de fluides frigorigènes cédant sa chaleur et comportant des fluides frigorigènes à basse température normale d'ébullition ; et
- un débit (100) basse pression de mélange diphasique desdits fluides frigorigènes producteur de froid, ce système comportant en outre :
- au moins un échangeur frigorifique (61,62) traversé par un gaz (161,162) comportant du CO₂ et des moyens (60) pour détendre ledit débit (122) haute pression refroidi en sortie de ladite cascade (E3, E2, E1) et pour en diriger au moins une partie (122) vers ledit au moins un échangeur frigorifique (61, 62), cet échangeur (61, 62) fonctionnant en cycle de givrage ;
- des moyens (21) pour obtenir une phase liquide à partir dudit débit (122) haute pression à refroidir ; et
- des moyens (39) pour détendre ladite phase liquide (122) en diriger au moins une partie (125) dans ledit au moins un échangeur frigorifique (61, 62), cet échangeur (61, 62) fonctionnant en cycle de dégivrage.

2. Système frigorifique selon la revendication 1, **caractérisé en ce qu'**il comporte au moins un séparateur (21, 31) pour obtenir une phase liquide sous pression (121, 123) dudit mélange de fluides frigorigènes (122), un détendeur (39, 49) apte à faire chuter la pression de ladite phase liquide, et des moyens (39, 49) pour rediriger au moins une partie de ladite phase liquide détendue dans ledit débit (100) basse pression de mélange de fluides frigorigènes producteur de froid.

3. Système frigorifique selon la revendication 1, **caractérisé en ce qu'**au moins une partie (125) du mélange de fluides frigorigènes obtenu en sortie dudit échangeur frigorifique (61, 62) fonctionnant en cycle de dégivrage est utilisé pour compléter ledit débit basse pression (100) de mélange de fluides frigorigènes en entrée d'au moins un échangeur (E1) de ladite cascade.

4. Système frigorifique selon la revendication 1, **caractérisé en ce que** ledit débit (100) basse pression introduit dans ladite cascade (E1, E2, E3) est obtenu à partir du débit (122) de mélange de fluides frigorigènes en sortie dudit échangeur frigorifique (61, 62) lorsque celui fonctionne en cycle de givrage.

5. Système selon la revendication 4, **caractérisé en ce qu'**il comporte des moyens (51) pour récupérer une partie (101) de la phase liquide du débit (100) basse pression de mélange de fluides frigorigènes en sortie dudit échangeur frigorifique.

6. Système selon la revendication 5, **caractérisé en ce qu'**il comporte :
- des moyens (81) pour comprimer ladite phase liquide (101) sous haute pression ;
- au moins un évaporateur (210, 220) apte à vaporiser ladite phase liquide haute pression ainsi obtenue ; et
- une turbine (82) apte à détendre ladite vapeur haute pression ainsi obtenue pour produire de l'énergie mécanique.

7. Système frigorifique selon l'une quelconque des revendications 1 à 6, **caractérisé en ce qu'**il comporte :
- un compresseur (10) à fréquence variable apte à comprimer ledit débit (100) basse pression en sortie de ladite cascade (E3, E2, E1) ; et
- un condenseur partiel (210) apte à condenser le mélange de fluides frigorigènes compressé par ledit compresseur (10) afin de régénérer ledit débit (122) haute pression pour introduction dans ladite cascade (E1, E2, E3).

8. Procédé de récupération de la froideur d'un débit (150) de méthane liquéfié pour capter par givrage du CO₂ compris dans un gaz, dans lequel on fait circuler (S10) ledit débit (150) dans une pluralité d'échangeurs en cascade (E1, E2, E3) également traversés par un débit (122) haute pression d'un mélange diphasique de fluides frigorigènes cédant sa chaleur et comportant des fluides frigorigènes à basse température normale d'ébullition, et par un débit (100) basse pression de mélange diphasique desdits fluides frigorigènes producteur de froid et dans lequel:
- on détend (S22) ledit débit (122) haute pression refroidi obtenu (S16) en sortie de ladite cascade (E3, E2, E1) ;
- on en utilise (S24) au moins une partie dans au moins un échangeur frigorifique (61,62) traversé par un gaz (161,162) comportant du CO₂ pour capter du CO₂ par givrage ;
- on obtient (S12) une phase liquide à partir dudit débit (122) haute pression à refroidir; et
- on en détend (S14) au moins une partie que l'on utilise (S17) dans ledit au moins un échangeur frigorifique (61,62) pour dégivrer du CO₂.

9. Procédé selon la revendication 8, dans lequel:
- on sépare (S12) ledit mélange de fluides frigorigènes (122) pour obtenir une phase liquide sous pression (121, 123) du mélange de fluides frigorigènes ;
- on détend (S14) la phase liquide ainsi obtenue ; et
- on en prélève (S15) au moins une partie après détente pour la rediriger dans ledit débit (100) basse pression de mélange de fluides frigorigènes producteur de froid.

10. Procédé selon la revendication 8, dans lequel on prélève (S30) au moins une partie (125) du mélange de fluides frigorigènes utilisé pour ledit dégivrage (S17) pour compléter ledit débit (100) basse pression introduit dans au moins un échangeur de ladite cascade.

11. Procédé selon la revendication 8, dans lequel le débit basse pression (100) introduit (S10) dans ladite cascade est obtenu à partir du débit (122) de mélange de fluides frigorigènes ayant servi audit givrage (S24).

12. Procédé selon la revendication 11, dans lequel on prélève (S40) une partie (101) de la phase liquide dudit débit (100) basse pression introduit dans ladite cascade.

13. Procédé selon la revendication 12, dans lequel :
- on comprime (S42) ladite phase liquide (101) sous haute pression ;
- on vaporise (S44) la phase liquide haute pression ainsi obtenue ; et
- on la détend (S46) dans une turbine (82) afin de produire de l'énergie mécanique.

14. Procédé selon l'une quelconque des revendications 8 à 13, dans lequel:
- on comprime (S52) avec une fréquence variable le débit (100) basse pression obtenu (S50) en sortie de ladite cascade (E3, E2, E1) ; et
- on condense partiellement (S54) le mélange de fluides frigorigènes ainsi compressé afin de régénérer ledit débit (122) haute pression introduit (S10) dans ladite cascade (E1, E2, E3).

## Patentansprüche

1. Kühlsystem zum Auffangen von CO₂, das in einem Gas (1) enthalten ist, durch Vereisung, umfassend eine Vielzahl von kaskadierten Tauschern (E1, E2, E3), wobei jeder der Tauscher umfasst:
- einen Zustrom (150) von verflüssigtem Methan als Kälteerzeuger,
- einen Hochdruck-Zustrom (122) einer zweiphasigen Mischung von Kältemitteln, der seine Wärme abgibt und Kältemittel mit niedriger normaler Siedetemperatur umfasst, und
- einen Niederdruck-Zustrom (100) der zweiphasigen Mischung der Kältemittel als Kälteerzeuger, wobei das System ferner umfasst:
- mindestens einen Kältetauscher (61, 62), der von einem Gas (161, 162) durchquert wird, das CO₂ umfasst, und Mittel (60) zum Entspannen des gekühlten Hochdruck-Zustroms (122) am Ausgang der Kaskade (E3, E2, E1), und um mindestens einen Teil (122) zu dem mindestens einen Kältetauscher (61, 62) zu leiten, wobei dieser Tauscher (61, 62) in einem Vereisungskreislauf arbeitet,
- Mittel (21) zum Erhalten einer Flüssigphase aus dem zu kühlenden Hochdruck-Zustrom (122) und
- Mittel (39) zum Entspannen der Flüssigphase (122), indem mindestens ein Teil (125) in den mindestens einen Kältetauscher (61, 62) geliefert wird, wobei dieser Tauscher (61, 62) in einem Enteisungskreislauf arbeitet.

2. Kühlsystem nach Anspruch 1, **dadurch gekennzeichnet, dass** es mindestens einen Separator (21, 31), um eine Flüssigphase unter Druck (121, 123) der Mischung von Kältemitteln (122) zu erhalten, einen Druckreduzierer (39, 49), der geeignet ist, den Druck der Flüssigphase sinken zu lassen, und Mittel (39, 49), um mindestens einen Teil der entspannten Flüssigphase in den Niederdruck-Zustrom (100) der Mischung von Kältemitteln als Kälteerzeuger umzuleiten, umfasst.

3. Kühlsystem nach Anspruch 1, **dadurch gekennzeichnet, dass** mindestens ein Teil (125) der Mischung von Kältemitteln, die am Ausgang des Kältetauschers (61, 62) erhalten wird, der in einem Enteisungszyklus arbeitet, verwendet wird, um den Niederdruck-Zustrom (100) der Mischung von Kältemitteln am Eingang mindestens eines Tauschers (E1) der Kaskade zu vervollständigen.

4. Kühlsystem nach Anspruch 1, **dadurch gekennzeichnet, dass** der Niederdruck-Zustrom (100), der in die Kaskade (E1, E2, E3) eingebracht wird, aus dem Zustrom (122) der Mischung von Kältemitteln am Ausgang des Kältetauschers (61, 62) erhalten wird, wenn jener in einem Vereisungszyklus arbeitet.

5. System nach Anspruch 4, **dadurch gekennzeichnet, dass** es Mittel (51) zur Rückgewinnung eines Teils (101) der Flüssigphase des Niederdruck-Zustroms (100) der Mischung von Kältemitteln am Ausgang des Kältetauschers umfasst.

6. System nach Anspruch 5, **dadurch gekennzeichnet, dass** es umfasst:
- Mittel (81) zum Komprimieren der Flüssigphase (101) unter hohem Druck,
- mindestens einen Verdampfer (210, 220), der geeignet ist, die so erhaltene Hochdruck-Flüssigphase zu verdampfen, und
- eine Turbine (82), die geeignet ist, den so erhaltenen Hochdruck-Dampf zu entspannen, um mechanische Energie zu erzeugen.

7. Kühlsystem nach einem der Ansprüche 1 bis 6, **dadurch gekennzeichnet, dass** es umfasst:
- einen Kompressor (10) mit variabler Frequenz, der geeignet ist, den Niederdruck-Zustrom (100) am Ausgang der Kaskade (E3, E2, E1) zu komprimieren, und
- einen partiellen Kondensator (210), der geeignet ist, die Mischung von Kältemitteln zu kondensieren, die von dem Kompressor (10) komprimiert wird, um den Hochdruck-Zustrom (122) zum Einbringen in die Kaskade (E1, E2, E3) zu regenerieren.

8. Verfahren zur Kälterückgewinnung aus einem Zustrom (150) von verflüssigtem Methan, um CO₂, das in einem Gas enthalten ist, durch Vereisung, aufzufangen, wobei der Zustrom (150) in einer Vielzahl von kaskadierten Tauschern (E1, E2, E3) zirkulieren gelassen wird (S10), die auch von einem Hochdruck-Zustrom (122) einer zweiphasigen Mischung von Kältemitteln, der seine Wärme abgibt und Kältemittel mit normaler niedriger Siedetemperatur umfasst, und von einem Niederdruck-Zustrom (100) der zweiphasigen Mischung der Kältemittel als Kälteerzeuger durchquert werden, und wobei:
- der Hochdruck-Zustrom (122), der erhalten wird (S16), am Ausgang der Kaskade (E3, E2, E1) entspannt wird (S22),
- davon mindestens ein Teil in mindestens einem Kältetauscher (61, 62) verwendet wird (S24), der von einem Gas (161, 162) durchquert wird, das CO₂ umfasst, um CO₂ durch Vereisung aufzufangen,
- eine Flüssigphase aus dem zu kühlenden Hochdruck-Zustrom (122) erhalten wird (S12) und
- mindestens ein Teil davon entspannt wird (S14), der in dem mindestens einen Kältetauscher (61, 62) verwendet wird (S17), um CO₂ zu enteisen.

9. Verfahren nach Anspruch 8, wobei:
- die Mischung von Kältemitteln (122) getrennt wird (S12), um eine Flüssigphase unter Druck (121, 123) der Mischung von Kältemitteln zu erhalten,
- die so erhaltene Flüssigphase entspannt wird (S14) und
- davon mindestens ein Teil nach dem Entspannen entnommen wird (S15), um diesen in den Niederdruck-Zustrom (100) der Mischung von Kältemitteln als Kälteerzeuger umzuleiten.

10. Verfahren nach Anspruch 8, wobei mindestens ein Teil (125) der Mischung von Kältemitteln, die für die Enteisung (17) verwendet wurde, entnommen wird (S30), um den Niederdruck-Zustrom (100) zu vervollständigen, der in den mindestens einen Tauscher der Kaskade eingebracht wird.

11. Verfahren nach Anspruch 8, wobei der Niederdruck-Zustrom (100), der in die Kaskade eingebracht wird (S10), aus dem Zustrom (122) der Mischung von Kältemitteln erhalten wird, die zur Vereisung gedient haben (S24).

12. Verfahren nach Anspruch 11, wobei ein Teil (101) der Flüssigphase des Niederdruck-Zustroms (100), der in die Kaskade eingebracht wird, entnommen wird (S40).

13. Verfahren nach Anspruch 12, wobei:
- die Flüssigphase (101) unter hohem Druck komprimiert wird (S42),
- die so erhaltene Hochdruck-Flüssigphase verdampft wird (S44) und
- diese in einer Turbine (82) entspannt wird (S46), um mechanische Energie zu erzeugen.

14. Verfahren nach einem der Ansprüche 8 bis 13, wobei:
- der Niederdruck-Zustrom (100), der am Ausgang der Kaskade (E3, E2, E1) erhalten wird (S50), mit einer variablen Frequenz komprimiert wird (S52) und
- die so komprimierte Mischung von Kältemitteln teilweise kondensiert wird (S54), um den Hochdruck-Zustrom (122), der in die Kaskade (E1, E2, E3) eingebracht wird (S10), zu regenerieren.

## Claims

1. A refrigeration system (1) to capture CO2 contained in a gas by frosting comprising a plurality of heat exchangers (E1, E2, E3) in cascade, each of said heat exchangers including:
• a flow (150) of cold-producing liquefied methane;
• a high-pressure flow (122) of a two-phase mixture of refrigerant fluids giving up its heat and including refrigerant fluids having a low normal boiling temperature; and
• a low-pressure flow (100) of a cold-producing two-phase mixture of said refrigerant fluids, ce system further comprising :•
at least one refrigeration heat exchanger (61, 62) passing a gas (161, 162) including CO2 and
means (60) for expanding said cooled high-pressure flow (122) at the outlet from said cascade (E3, E2, E1) and for directing at least a portion (122) thereof to said least one refrigeration heat exchanger (61, 62), said heat exchanger (61, 62) operating in a frosting cycle.
• means (21) for obtaining a liquid phase from said high-pressure flow (122) for cooling; and
• means (39) for expanding said liquid phase (122) and directing at least a portion (125) thereof into said at least one refrigeration heat exchanger (61, 62), said heat exchanger (61, 62) operating in a defrosting cycle.

2. A refrigeration system according to claim 1, **characterized in that** it includes at least one separator (21, 31) for obtaining a pressurized liquid phase (121, 123) of said mixture of refrigerant fluids (122), an expander (39, 49) suitable for causing the pressure of said liquid phase to drop, and means (39, 49) for redirecting at least a portion of said expanded liquid phase into said low-pressure flow (100) of a mixture of cold-producing refrigerant fluids.

3. A refrigeration system according to claim 1, **characterized in that** at least a portion (125) of the mixture of refrigerant fluids obtained at the outlet from said refrigeration heat exchanger (61, 62) operating in a defrosting cycle is used to top up said low-pressure flow (100) of a mixture of refrigerant fluids at the inlet to at least one heat exchanger (E1) of said cascade.

4. A refrigeration system according to claim 1, **characterized in that** said low-pressure flow (100) introduced into said cascade (E1, E2, E3) is obtained from the flow (122) of a mixture of refrigerant fluids at the outlet from said refrigeration heat exchanger (61, 62) when it is operating in a frosting cycle.

5. A system according to claim 4, **characterized in that** it includes means (51) for recovering a portion (101) of the liquid phase of the low-pressure flow (100) of a mixture of refrigerant fluids at the outlet from said refrigeration heat exchanger.

6. A system according to claim 5, **characterized in that** it includes:
• means (81) for compressing said high pressure liquid phase (101);
• at least one evaporator (210, 220) suitable for vaporizing said high pressure liquid phase as obtained in this way; and
• a turbine (82) suitable for expanding said high pressure vapor as obtained in this way in order to produce mechanical energy.

7. A refrigeration system according to any one of claims 1 to 6, **characterized in that** it includes:
• a variable frequency compressor (10) suitable for compressing said low-pressure flow (100) at the outlet from said cascade (E3, E2, E1); and
• a partial condenser (210) suitable for condensing the mixture of refrigerant fluids compressed by said compressor (10) in order to regenerate said high-pressure flow (122) for introduction into said cascade (E1, E2, E3).

8. A method of recovering cold from a flow (150) of liquefied methane to capture CO2 contained in a gas by frosting, wherein said flow (150) is caused to flow (S10) through a plurality of heat exchangers (E1, E2, E3) in cascade also having flowing therethrough a high-pressure flow (122) of a two-phase mixture of refrigerant fluids giving up its heat and including refrigerant fluids having low normal boiling temperatures, and by a cold producing low-pressure flow (100) of a mixture of said two-phase refrigerant fluids, and including:
• expanding (S22) said cooled high-pressure flow (122) obtained (S16) at the outlet from said cascade (E3, E2, E1); and
• using (S24) at least a portion thereof in at least one refrigeration heat exchanger (61, 62) passing a gas (161, 162) including CO2, in order to capture CO₂ by frosting;
• obtaining (S12) a liquid phase from said high-pressure flow (122) to be cooled ; and
• expanding (S14) at least a portion thereof for use (S17) in said at least one refrigeration heat exchanger (61, 62) for defrosting the CO₂.

9. A method according to claim 8, including the steps of:
• separating (S12) said mixture of refrigerant fluids (122) to obtain a pressurized liquid phase (121, 123) of the refrigerant fluid mixture;
• expanding (S14) the liquid phase as obtained in this way; and
• taking therefrom (S15) at least a portion after expansion and redirecting it into said cold producing low-pressure flow (100) of a mixture of refrigerant fluids.

10. A method according to claim 9, including taking (S30) at least a fraction (125) of the mixture of refrigerant fluids used for said defrosting (S17) in order top up said low-pressure flow (100) introduced into at least one heat exchanger of said cascade.

11. A method according to claim 8, wherein the low-pressure flow (100) introduced (S10) into said cascade is obtained from the flow (122) of a mixture of refrigerant fluids that have been used for said frosting (S24).

12. A method according to claim 11, including taking (S40) a portion (101) of the liquid phase of said high-pressure flow (100) introduced into said cascade.

13. A method according to claim 12, including the steps of:
• compressing (S42) said liquid phase (101) under high pressure;
• vaporizing (S44) the high pressure liquid phase as obtained in this way; and
• expanding (S46) it in a turbine (82) in order to produce mechanical energy.

14. A method according to any one of claims 8 to 13, including the steps of:
• compressing (S52) at variable frequency the low-pressure flow (100) obtained (S50) at the outlet from said cascade (E3, E2, E1); and
• partially condensing (S54) the mixture of refrigerant fluids as compressed in this way in order to regenerate said high-pressure flow (122) introduced (S10) into said cascade (E1, E2, E3).
